# DEMANDE DE BREVET EUROPEEN

(11) **EP 1 002 490 A1**
(43) Date de publication de la demande: **24.05.2000**
(21) Numéro de dépôt: 99122715.8
(22) Date de dépôt: 16.11.1999
(51) Int. Cl.: A47J 31/40

(54) **Machine distributrice de boisson**

(30) Priorité: 17.11.1998 IT VI980223
(71) Demandeur: Adriani, Antonio, 36015 Schio (Vicenza) (IT)
(72) Inventeur: Adriani, Antonio, 36015 Schio (Vicenza) (IT)
(74) Mandataire: Bettello, Pietro, Dott. Ing.

(57) **Abrégé**

Machine distributrice de boisson, telle que café, thé et autres produits analogues obtenus par infusion, du type faisant appel à des portions monodoses, ou pastilles, de poudre de ladite boisson, convenablement conditionnées, destinées à subir une action d'infusion, ladite machine étant caractérisée par le fait que les pastilles sont contenues à l'intérieur de la machine (1) elle-même, et en ce que la machine comprend des moyens de sélection, notamment un bouton poussoir, d'une pastille considérée de manière à soumettre la pastille sélectionnée à l'action d'infusion.

## Description

L'invention se rapporte à la réalisation d'une machine distributrice de boisson selon le préambule de la revendication 1.

On connaît bien des machines distributrices de café, thé ou autres types d'infusions qui, grâce à leurs dimensions réduites, sont installées dans les bureaux, dans les activités commerciales, dans de petites communautés et aptes à l'usage familial.

Ces derniers temps, on a vu s'imposer sur le marché une machine distributrice de café, à usage ménager et pour de petites communautés, qui utilise ce qu'on appelle des "pastilles", c'est-à-dire des portions monodoses de poudre de café, convenablement conditionnées, que l'utilisateur insère dans la machine à travers une trappe, où elles subissent l'action d'infusion. Si, d'un côté, il assure la fragrance du produit infusé, puisque la poudre de café est conditionnée dans la pastille de façon hermétique et par des techniques sous-vide, de façon à conserver tout l'arôme jusqu'au moment de l'infusion, ce système présente en même temps deux inconvénients.

Un premier inconvénient résulte de la gestion et de la distribution des pastilles, lesquelles sont généralement disposées dans un récipient placé à l'extérieur et à proximité de la machine, de sorte qu'elles peuvent être facilement manipulées, en engendrant d'évidents problèmes d'hygiène, ou prélevées sans contrôle, en rendant ainsi difficile la gestion économique du service de distribution.

Un deuxième inconvénient résulte de la complexité de l'opération de chargement de la pastille sur la machine puisque l'utilisateur, après avoir prélevé la pastille, doit la dégager de l'enveloppe de conditionnement, ouvrir une trappe de la machine, insérer correctement la pastille dans un logement approprié et refermer, toujours correctement, ladite trappe.

L'invention vise à réaliser une machine distributrice de boisson permettant de remédier à ces différents inconvénients.

A cet effet, elle a pour objet une machine distributrice de boisson selon les caractéristiques de la revendication 1.

Dans la machine distributrice de boisson conforme à l'invention, les pastilles sont contenues à l'intérieur de la machine elle-même, de sorte que l'utilisateur a seulement à agir sur les moyens de sélection, tels qu'un bouton, pour la sélection du type de boisson et, si nécessaire, à introduire la contre-valeur au moyen de jetons, clés, ou cartes magnétiques, comme cela se fait dans les machines distributrices de plus grandes dimensions.

Ceci se réalise en prévoyant à l'intérieur de la machine un magasin de pastilles constitué par un carrousel tournant, à axe vertical, muni sur sa circonférence de canaux verticaux à l'intérieur de chacun desquels est insérée une pile de pastilles.

Ce magasin cylindrique est susceptible de tourner angulairement autour de son axe vertical, de façon à positionner une seule pastille à la fois au droit d'un dispositif d'expulsion, qui pourvoit à la déposer sur le filtre de la chaudière, qui effectue l'infusion de la poudre avec de l'eau chaude.

A la fin de l'action d'infusion, le même dispositif d'expulsion ou un autre dispositif ultérieur pourvoit à expulser la pastille épuisée de la machine.

Une forme préférée de conditionnement de la poudre de café en pastille prévoit la réalisation d'un conteneur rigide du type "blister".

Une autre forme de réalisation prévoit que la machine est aussi dotée d'un magasin de gobelets et de dispositifs aptes à en positionner un à la fois au-dessous de la zone d'infusion du produit pour recueillir la boisson chaude produite, telle que du café, du thé et analogues.

Ces caractéristiques de l'invention ainsi que d'autres seront mieux mises en évidence par la description d'une forme possible de réalisation, donnée seulement à titre d'exemple illustratif et non limitatif, à l'aide des planches de dessins annexées sur lesquelles :
- la Fig. 1 (planche I) représente une vue en élévation, en coupe, du distributeur de pastilles selon l'invention, logé dans une machine distributrice de café,
- la Fig. 2 (planche II) représente une vue en plan, en coupe selon la ligne II-II de la Fig. 1, de la machine distributrice.

Sur la figure, on peut voir la machine distributrice 1 de boisson infusée telle que du café, du thé et analogues, obtenue au moyen de l'infusion du produit monodose contenu dans la pastille 2 placée au droit d'une chaudière 3 ; cette dernière pourvoit à réaliser l'infusion et la boisson chaude est recueillie dans un gobelet 4 placé au-dessous. La machine comprend dans son volume intérieur un magasin 5 de pastilles 2', disposé de façon à former une pluralité de piles 6 disposées verticalement et sur la circonférence extérieure d'un disque 7, qui tourne avec un axe vertical 8.

La rotation angulaire du disque 7 pourvoit à positionner la pastille 2 inférieure de l'une des piles au droit de la chaudière 3.

Ensuite, un dispositif d'expulsion 9, placé à l'intérieur du magasin à carrousel 10, pousse radialement la pastille 2 jusqu'à la placer sur la plaque chauffante 11, sur le même axe que la chaudière 3, laquelle, en s'abaissant, réalise l'infusion du produit.

Aussi bien la rotation du magasin à carrousel 10 que la mise en mouvement du dispositif d'expulsion 9 sont réalisés avec des moyens connus en soi.

Une première forme préférée de réalisation prévoit que l'ensemble du magasin à carrousel 10 repose sur une base 12 et est mis en rotation autour de son axe vertical au moyen d'un moteur 13 de dimensions réduites, ou bien à l'aide d'une came du type connu sous la désignation de "Croix de Malte", non représentée.

De la même façon, une forme préférée de réalisation du dispositif d'expulsion 9 prévoit l'utilisation d'un curseur radial 14, qui coulisse alternativement dans un guide fixe 15 sous l'action d'un moteur 16 de dimensions réduites.

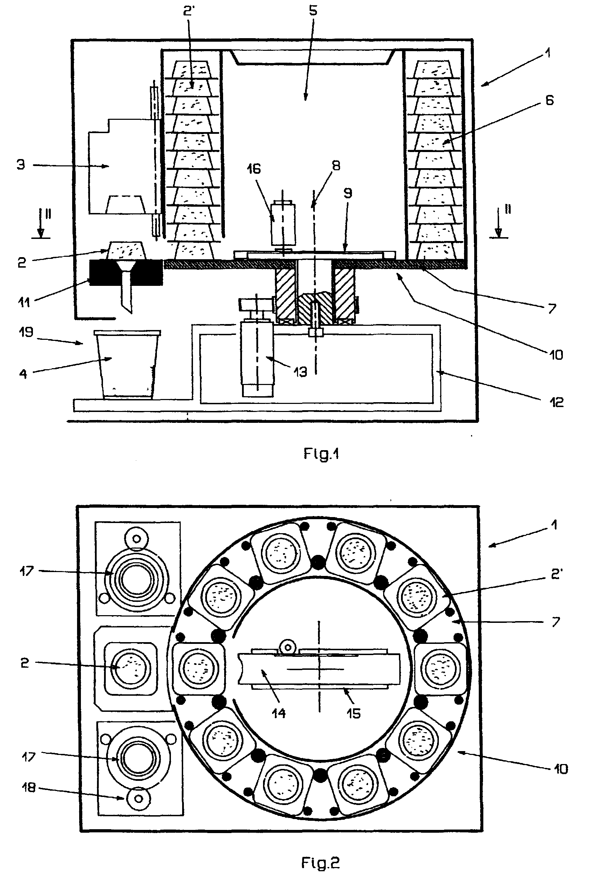

Comme on peut le voir sur la Fig. 2, la machine 1 peut être équipée d'un ou plusieurs magasins de gobelets 17 et de moyens, connus en soi, tels que des cames rotatives 18, qui pourvoit à détacher de la pile un seul gobelet pour le positionner sur le logement 19 au-dessous de la plaque chauffante 1 1 pour recueillir la boisson infusée.

Il est possible d'adopter des formes de réalisation différentes de celle illustrée, par exemple en prévoyant plusieurs magasins tournants à l'intérieur de la même machine distributrice.

## Revendications

1. Machine distributrice de boisson, telle que café, thé et autres produits analogues obtenus par infusion, du type faisant appel à des portions monodoses, ou pastilles, de poudre de ladite boisson, convenablement conditionnées, destinées à subir une action d'infusion, ladite machine étant caractérisée par le fait que les pastilles sont contenues à l'intérieur de la machine (1) elle-même, et en ce que la machine comprend des moyens de sélection, notamment un bouton poussoir, d'une pastille considérée de manière à soumettre la pastille sélectionnée à l'action d'infusion.

2. Machine distributrice selon la revendication 1, caractérisée par le fait de prévoir, dans son volume intérieur, un dispositif distributeur apte à positionner chaque pastille sélectionnée (2) au droit d'une chaudière (3) dans laquelle l'infusion se produit, la boisson chaude étant recueillie dans un gobelet (4) placé au-dessous de ladite chaudière (3).

3. Machine distributrice selon les revendications 1 et 2, caractérisée par le fait que les pastilles (2') sont disposées sur un carrousel tournant (10), qui constitue un magasin intérieur desdites pastilles.

4. Machine distributrice selon la revendication 3, caractérisée par le fait que, dans le magasin, les pastilles (2') sont disposées de façon à former une pluralité de piles (6) disposées de façon pratiquement verticale et à proximité de la circonférence extérieure d'un disque (7), qui tourne avec un axe vertical (8), la rotation angulaire dudit disque permettant de positionner la pastille (2) inférieure de l'une des piles (6) au droit de la chaudière (3).

5. Machine distributrice selon une ou plusieurs des revendications précédentes, caractérisée par le fait que le dispositif distributeur comprend un dispositif d'expulsion (9), placé à l'intérieur du magasin à carrousel (10), qui pousse radialement la pastille (2) jusqu'à la placer sur une plaque chauffante (11), co-axiale à la chaudière (3), cette dernière, en s'abaissant, réalisant l'infusion du produit.

6. Machine distributrice selon une ou plusieurs des revendications précédentes, caractérisée par le fait qu'elle comprend un moteur (13) de mise en rotation angulaire du magasin à carrousel (10) autour de son axe vertical.

7. Machine distributrice selon une ou plusieurs des revendications précédentes, caractérisée par le fait que le magasin à carrousel (10) est mis en rotation angulaire autour de son axe vertical à l'aide d'une came du type connu sous la désignation de "Croix de Malte".

8. Machine distributrice selon une ou plusieurs des revendications précédentes, caractérisée par le fait que le dispositif d'expulsion (9) comprend un curseur radial (14), qui coulisse alternativement dans un guide fixe (15) sous l'action d'un autre moteur (16).

9. Machine distributrice selon une ou plusieurs des revendications précédentes, caractérisée par le fait d'être équipée, dans son volume intérieur, d'un ou plusieurs magasins de gobelets (17) empilés et de moyens, connus en soi, notamment de cames rotatives (18), propres à détacher, de la pile de gobelets, un unique gobelet de façon à le positionner sur un logement (19) au-dessous de la plaque chauffante (11) pour recueillir la boisson infusée.

10. Machine distributrice selon une ou plusieurs des revendications précédentes, caractérisée par le fait de prévoir dans son volume intérieur au moins deux magasins à carrousel (10).
